# EUROPÄISCHE PATENTSCHRIFT

(11) **EP 1 616 087 B1**
(45) Veröffentlichungstag und Bekanntmachung des Hinweises auf die Patenterteilung: **11.07.2007**
(21) Anmeldenummer: 04726484.1
(22) Anmeldetag: 08.04.2004
(51) Int. Cl.: F02B 29/04, F01P 7/16

(54) **KREISLAUFANORDNUNG ZUR KÜHLUNG VON LADELUFT UND VERFAHREN ZUM BETREIBEN EINER DERARTIGEN KREISLAUFANORDNUNG**
CIRCUIT ARRANGEMENT WHICH COOLS CHARGING AIR AND METHOD FOR THE OPERATION OF SAID TYPE OF CIRCUIT ARRANGEMENT
DISPOSITIF DE CIRCUIT POUR REFROIDIR L'AIR DE SURALIMENTATION ET PROC D POUR FAIRE FONCTIONNER UN DISPOSITIF DE CE TYPE

(30) Priorität: 11.04.2003 DE 10317003
(43) Veröffentlichungstag der Anmeldung: 18.01.2006
(73) Patentinhaber: Behr GmbH & Co. KG, 70469 Stuttgart (DE)
(72) Erfinder: BUNDSCHUH, Steffen, 70178 Stuttgart (DE); PANTOW, Eberhard, 71696 Möglingen (DE); PARMENTIER, Sarah, 70839 Gerlingen (DE); ROGG, Stefan, 70193 Stuttgart (DE)
(74) Vertreter: Grauel, Andreas
(86) Internationale Anmeldenummer: PCT/EP2004/003797
(87) Internationale Veröffentlichungsnummer: WO 2004/090303

(56) Entgegenhaltungen:
- DE-A- 2 717 520
- DE-A- 10 135 893
- FR-A- 2 832 185
- US-A- 5 353 757
- US-A- 6 006 731
- US-A- 6 158 398

## Beschreibung

Die Erfindung betrifft eine Kreislaufanordnung zur Kühlung von Ladeluft bei einem Kraftfahrzeug mit einem Turbolader gemäß dem Anspruch 1 sowie ein Verfahren zum Betreiben einer derartigen Kreislaufanordnung gemäß dem Anspruche 4 oder 5.

Gemäß dem Stand der Technik werden zur Leistungssteigerung von Motoren Turbolader zur Verdichtung der Luft verwendet. Hierbei erfolgt jedoch eine Erwärmung der Luft, im folgenden als Ladeluft bezeichnet, auf Grund der Kompression im Turbolader auf Temperaturen von über 100°C. Um eine derartige Lufterwärmung zu vermindern, werden Luftkühler verwendet, die vorne im Kühlmodul angeordnet sind und zur Kühlung der Ladeluft dienen. Die Ladeluft strömt dabei durch einen Wärmetauscher, der von Umgebungsluft durchströmt und damit gekühlt wird. Dadurch ist eine Abkühlung der Ladeluft auf eine Temperatur möglich, die etwa 15-50 K über der Temperatur der Umgebungsluft liegt.

Ferner ist bekannt, dass die Kühlung der Ladeluft über einen Kältemittelkreislauf erfolgt, beispielsweise einem Niedertemperatur-Kreislauf, in dem das Kältemittel auf sehr niedrige Temperaturen herabgekühlt wird. Mit diesem kalten Kältemittel wird die Ladeluft in einem Ladeluft/Kühlmittel-Kühler auf eine vorgegebene Kühltemperatur heruntergekühlt. Für die Verschaltung des Niedertemperatur-Kreislaufs gibt es zwei Varianten, nämlich eine Integration des Niedertemperatur-Kreislaufs in einen Nebenkreislauf des Motorkühlsystems oder eine Ausgestaltung in Form eines separaten Kreislaufs.

Das Dokument US-A-5 353 757 zeigt ein Beispiel eines Kühlsystems mit zwei Separaten Kreisläufe.

Die Ausgestaltung als separater Kreislauf hat den Vorteil, dass niedrige Temperaturen erreicht werden können.

Beim integrierten Kreislauf kann bei entsprechender Verschaltung auf eine zusätzliche Pumpe verzichtet werden. Allerdings ist man durch den Motor-Thermostaten an die Temperatur des Haupt-Kreislaufs gekoppelt, so dass bei hoher Außentemperatur oder Teillast-Betrieb nicht die gleiche Abkühlung erreicht werden kann, wie bei einem separaten Kreislauf. Außerdem ist bei einer Austrittregelung, das heißt der Thermostat ist am Motoraustritt angeordnet, der Niedertemperatur-Kreislauf pumpendruckseitig anzubringen. Dadurch erhöht sich der Druck im Niedertemperatur-Kühler, was zu Problemen bei der Dauerfestigkeit führen kann.

Es ist Aufgabe der Erfindung, eine Kreislaufanordnung der eingangs genannten Art zu verbessern.

Diese Aufgabe wird gelöst durch eine Kreislaufanordnung mit den Merkmalen des Anspruchs 1.

Erfindungsgemäß wird eine Kreislaufanordnung mit einem Niedertemperatur-Kreislauf zur Kühlung von Ladeluft bei einem Kraftfahrzeug mit einem Turbolader und einem Motorkühl-Kreislauf zur Kühlung eines Motors vorgesehen, wobei der Niedertemperatur-Kreislauf mit dem Motorkühl-Kreislauf derart zeitweise koppelbar ist, dass Kühlmittel von einem Kreislauf in den anderen Kreislauf und zurück gelangen kann, wodurch die Vorteile einer getrennten Anordnung von Niedertemperatur- und Motorkühl-Kreislauf und einer fest miteinander verbundenen Anordnung von Niedertemperatur- und Motorkühl-Kreislauf verbunden werden.

Bevorzugt ist eine Speise-Leitung zwischen dem Motorkühl-Kreislauf und dem Niedertemperatur-Kreislauf vorgesehen. Durch die Speise-Leitung, die vorzugsweise von einem Motorthermostat, welcher im Motorkühl-Kreislauf in Strömungsrichtung gesehen nach dem Motor angeordnet ist, zu einem Mischthermostat führt, welcher in den Niedertemperatur-Kreislauf integriert ist, kann warmes Kühlmittel vom Motorkühl-Kreislauf in den Niedertemperatur-Kreislauf gelangen.

Für den Rückfluss von Kühlmittel aus dem Niedertemperatur-Kreislauf in den Motorkühl-Kreislauf ist vorzugsweise eine Rückspeise-Leitung zwischen dem Mischthermostat und dem Motorthermostat angeordnet.

Bevorzugt handelt es sich beim Mischthermostat um ein Dehnstoffthermostat oder ein elektrisch oder pneumatisch betätigbares Ventil.

Zum Betreiben der Kreislaufanordnung strömt vorzugsweise beim Warmlaufen des Motors Kühlmittel aus dem Motorkühl-Kreislauf in den Niedertemperatur-Kreislauf. Dies dient zur Beschleunigung des Warmlaufens.

Im warmen Zustand des Motors, also im Normalbetrieb, kann zur Unterstützung der Regeneration von Partikelfiltern vorzugsweise warmes Kühlmittel aus dem Motorkühl-Kreislauf in den Niedertemperatur-Kreislauf strömen. Somit erwärmt warmes Kühlmittel aus dem Motorkühl-Kreislauf Ladeluft im Ladeluft/Kühlmittel-Kühler. Ferner kann die Kühlung der Ladeluft begrenzt werden, um ein Auskühlen des Motors bei bestimmten Umgebungsbedingungen zu verhindern.

Die Trennung der beiden Kreisläufe im Normalbetrieb führt zu einer hohen Abkühlung der Ladeluft und damit zu einer hohen Motorleistung und niedrigen NOₓ-Anteilen im Abgas.

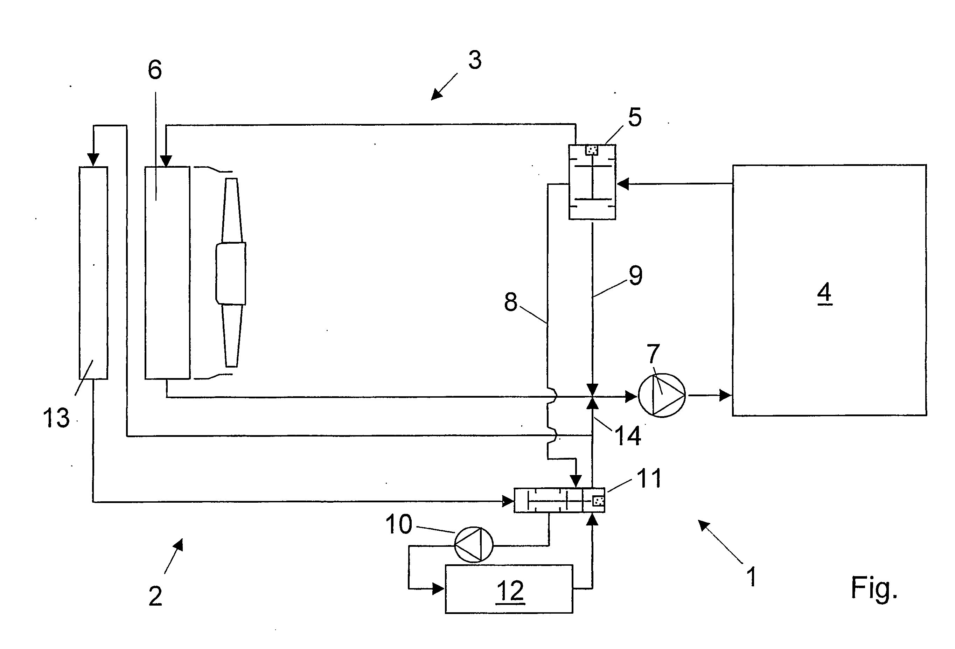

Im folgenden wird die Erfindung anhand eines Ausführungsbeispiels unter Bezugnahme auf die Zeichnung im einzelnen erläutert.

Die einzige Figur der Zeichnung zeigt eine Kreislaufanordnung 1 mit einem Niedertemperatur-Kreislauf 2 zur Kühlung von Ladeluft und einem Motorkühl-Kreislauf 3 (Haupt-Kreislauf) zur Kühlung eines Verbrennungs-Motors, im folgenden als Motor 4 bezeichnet.

Der Motorkühl-Kreislauf 3 umfasst den Motor 4, einen Motorthermostat 5, einen Kühlmittel-Kühler 6 sowie eine Kühlmittel-Pumpe 7. Vom Mischthermostat 5 ausgehend ist eine Speise-Leitung 8 zum Niedertemperatur-Kreislauf 2 vorgesehen, deren Funktion an späterer Stelle näher beschrieben wird. Zwischen dem Motorthermostat 5 und der Leitung zwischen Kühlmittel-Kühler 6 und Kühlmittel-Pumpe 7 ist ein Bypass 9 vorgesehen, so dass Kühlmittel am Kühlmittel-Kühler 6 vorbeigeführt werden kann.

Der Niedertemperatur-Kreislauf 2 umfasst eine Kühlmittel-Pumpe 10, einen Mischthermostat 11, vorliegend ein Dehnstoffthermostat, einen Ladeluft/Kühlmittel-Kühler 12 und einen Niedertemperatur-Kühler 13. Die oben genannte Speise-Leitung 8 mündet in den Mischthermostat 11. Ferner ist eine Rückspeise-Leitung 14 zwischen der Leitung nach dem Mischthermostat 11 und vor dem Niedertemperatur-Kühler 13 sowie nach dem Kühlmittel-Kühler 6 und vor der Kühlmittel-Pumpe 8 vorgesehen.

Eine in der Figur schematisch rechts vom Kühlmittel-Kühler 6 angedeutete Luftfördereinrichtung mit einem oder mehreren saugenden und/oder drükkenden Lüftern versorgt den Kühlmittel-Kühler 6 und den Niedertemperatur-Kühler 13 mit kühlender Luft, wobei zuerst der Niedertemperatur-Kühler 13 von der kühlenden Luft und anschließend der Kühlmittel-Kühler 6 durchströmt wird.

Die Funktion der Kreislaufanordnung 1 ist folgende. In einem normalen Betriebszustand wird das Kühlmittel des Niedertemperatur-Kreislaufs 2 beim Durchströmen des Ladeluft/Kühlmittel-Kühlers 12 relativ stark erwärmt. Dabei ist der Mischthermostat 11 gegenüber der Speise-Leitung 8 verschlossen, so dass kein Kühlmittel vom Motorkühl-Kreislauf 3 in den Niedertemperatur-Kreislauf 2 gelangen kann und zwei getrennte Kreisläufe vorliegen, wie aus dem Stand der Technik bekannt.

Beim Warmlaufen des Motors 4 oder anderen Betriebsbedingungen, in denen die Ladeluftkühlung begrenzt oder die Ladeluft sogar angeheizt werden muss, verlässt das Kühlmittel den Ladeluft/Kühlmittel-Kühler 12 relativ kalt. Der Mischthermostat 11 öffnet in diesen Fällen gegenüber der Speise-Leitung 8, so dass Kühlmittel aus dem Motorkühl-Kreislauf 3 in den Niedertemperatur-Kreislauf 2 strömen kann. Das Kühlmittel aus dem Motorkühl-Kreislauf wird im Mischthermostat 11 gegebenenfalls mit kaltem Kühlmittel aus dem Niedertemperatur-Kreislauf 2, das dem Mischthermostat 11 von der Kühlmittel-Pumpe 10 zuströmt, gemischt und dem Ladeluft/Kühlmittel-Kühler 12 zugeführt. Die Zuführung von Kühlmittel aus dem Motorkühl-Kreislauf 3 in den Niedertemperatur-Kreislauf 2 wird durch ein entsprechendes Rückströmen von Kühlmittel aus dem Niedertemperatur-Kreislauf 2 in den Motorkühl-Kreislauf 3 über die Rückspeise-Leitung 14 ausgeglichen.

Um aus dem Normalbetrieb heraus eine Anheizung der Ladeluft in Regenerierungsphasen von Partikelfiltern zu ermöglichen, wird der Mischthermostat 11 gegenüber der Speise-Leitung 8 geöffnet, obwohl das Kühlmittel den Ladeluft/Kühlmittel-Kühler 12 relativ stark erwärmt verlässt. Hierbei ist beim als Dehnstoffthermostat ausgebildeten Mischthermostat 11 eine elektrische Beheizung vorgesehen, wobei im Normalbetrieb eine Beheizung erfolgt. Eine Abschaltung der Beheizung durch die Motorelektronik führt dann zu einer entsprechenden Beeinflussung des Dehnstoffthermostaten.

Ist anstelle eines Dehnstoffthermostaten ein fremdenergiebetätigtes Ventil vorgesehen, so wird bei Bedarf Fremdenergie in Folge eines Steuersignals aktiviert.

### Bezugszeichenliste

- 1: Kreislaufanordnung
- 2: Niedertemperatur-Kreislauf
- 3: Motorkühl-Kreislauf
- 4: Motor
- 5: Motorthermostat
- 6: Kühlmittel-Kühler
- 7: Kühlmittel-Pumpe
- 8: Speise-Leitung
- 9: Bypass
- 10: Kühlmittel-Pumpe
- 11: Mischthermostat
- 12: Ladeluft/Kühlmittel-Kühler
- 13: Niedertemperatur-Kühler
- 14: Rückspeise-Leitung

## Patentansprüche

1. Kreislaufanordnung mit einem Niedertemperatur-Kreislauf (2) zur Kühlung von Ladeluft bei einem Kraftfahrzeug mit einem Turbolader und einem Motorkühl-Kreislauf (3) zur Kühlung eines Motors (4), wobei der Niedertemperatur-Kreislauf (2) mit dem Motorkühl-Kreislauf (3) derart zeitweise koppelbar ist, dass Kühlmittel von einem Kreislauf (2, 3) in den anderen Kreislauf (2, 3) und zurück gelangen kann, wobei eine Speise-Leitung (8) zwischen dem Motorkühl-Kreislauf (3) und dem Niedertemperatur-Kreislauf (2) vorgesehen ist **dadurch gekennzeichnet, dass** (8) von einem Motorthermostat (5), welches im Motorkühl-Kreislauf (3) in Strömungsrichtung gesehen nach dem Motor (4) angeordnet ist, zu einem Mischthermostat (11), welches in den Niedertemperatur-Kreislauf (2) integriert ist, führt.

2. Kreislaufanordnung nach Anspruch 1, **dadurch gekennzeichnet, dass** eine Rückspeise-Leitung (14) zwischen dem Mischthermostat (11) und dem Motorthermostat (5) angeordnet ist.

3. Kreislaufanordnung nach einem der Ansprüche 1 oder 2, **dadurch gekennzeichnet, dass** das Mischthermostat (11) ein Dehnstoffthermostat oder ein elektrisch oder pneumatisch betätigbares Ventil ist.

4. Verfahren zum Betreiben einer Kreislaufanordnung (1) gemäß einem der vorstehenden Ansprüche, **dadurch gekennzeichnet, dass** beim Warmlaufen des Motors (4) Kühlmittel aus dem Motorkühl-Kreislauf (3) in den Niedertemperatur-Kreislauf (2) strömt.

5. Verfahren zum Betreiben einer Kreislaufanordnung (1) gemäß einem der vorstehenden Ansprüche, **dadurch gekennzeichnet, dass** im warmen Zustand des Motors (4) Kühlmittel aus dem Motorkühl-Kreislauf (3) in den Niedertemperatur-Kreislauf (2) strömt.

6. Verfahren nach einem der Ansprüche 4 oder 5, **dadurch gekennzeichnet, dass** warmes Kühlmittel aus dem Motorkühl-Kreislauf (3) zur Erwärmung von Ladeluft im Ladeluft/Kühlmittel-Kühler (12) verwendet wird.

## Claims

1. A circuit arrangement with a low temperature circuit (2) for cooling charging air in a motor vehicle having a turbocharger and an engine cooling circuit (3) for cooling an engine (4), it being possible to couple the low temperature circuit (2) with the engine cooling circuit (3) from time to time in such a manner that coolant from one circuit (2, 3) is able to move to the other circuit (2, 3) and back, a supply line (8) being provided between the engine cooling circuit (3) and the low temperature circuit (2),
**characterised in that**
the supply line (8) leads from an engine thermostat (5) which is positioned in the engine cooling circuit (3) downstream of the engine (4) when viewed in the direction of flow to a mixing thermostat (11) which is integrated in the low temperature circuit (2).

2. A circuit arrangement in accordance with claim 1,
**characterised in that**
a return line (14) is positioned between the mixing thermostat (11) and the engine thermostat (5).

3. A circuit arrangement in accordance with one of claims 1 or 2,
**characterised in that**
the mixing thermostat (11) is an expanding material thermostat or an electrically or pneumatically actuated valve.

4. A process for the operation of a circuit arrangement (1) in accordance with one of the preceding claims,
**characterised in that**
if the engine (4) overheats coolant from the engine cooling circuit (3) flows into the low temperature circuit (2).

5. A process for the operation of a circuit arrangement (1) in accordance with one of the preceding claims,
**characterised in that**
when the engine (4) is warm coolant flows out of the engine cooling circuit (3) into the low temperature circuit (2).

6. A process in accordance with one of claims 4 or 5,
**characterised in that**
warm coolant from the engine cooling circuit (3) is used to heat up charging air in the charge air/coolant cooler (12).

## Revendications

1. Dispositif de circuit comprenant un circuit à basse température (2) pour le refroidissement de l'air de suralimentation sur un véhicule équipé d'un turbocompresseur et d'un circuit de refroidissement de moteur (3) pour le refroidissement d'un moteur (4), le circuit à basse température (2) pouvant être couplé temporairement avec le circuit de refroidissement du moteur (3) de telle sorte que le réfrigérant peut faire l'aller et retour entre un circuit (2, 3) et l'autre circuit (2, 3), une conduite d'alimentation (8) étant prévue entre le circuit de refroidissement du moteur (3) et le circuit à basse température (2), **caractérisé en ce que** la conduite d'alimentation (8) va d'un thermostat de moteur (5), qui est disposé dans le circuit de refroidissement du moteur (3) vers le moteur (4) vu dans le sens d'écoulement, à un thermostat mixte (11) qui est intégré dans le circuit à basse température (2).

2. Agencement de circuit selon la revendication 1, **caractérisé en ce qu'**une conduite d'alimentation de retour (14) est disposée entre le thermostat mixte (11) et le thermostat du moteur (5) .

3. Dispositif de circuit selon l'une quelconque des revendications 1 ou 2, **caractérisé en ce que** le thermostat mixte (11) est un thermostat de produit extensible ou une vanne à commande électrique ou pneumatique.

4. Procédé pour l'exploitation d'un dispositif de circuit (1) selon l'une quelconque des revendications précédentes, **caractérisé en ce que**, lors de l'échauffement du moteur (4), du réfrigérant sort du circuit de refroidissement du moteur (3) et va dans le circuit à basse température (2).

5. Procédé pour l'exploitation d'un dispositif de circuit (1) selon l'une quelconque des revendications précédentes, **caractérisé en ce que**, lorsque le moteur (4) est chaud, du réfrigérant sort du circuit de refroidissement de moteur (3) pour aller dans le circuit à basse température (2).

6. Procédé selon l'une quelconque des revendications 4 ou 5, **caractérisé en ce que** du réfrigérant chaud sortant du circuit de refroidissement de moteur (3) est utilisé pour le réchauffement de l'air de suralimentation dans le refroidisseur d'air de suralimentation à réfrigérant (12).
